# EUROPEAN PATENT APPLICATION

(11) **EP 3 425 607 A1**
(43) Date of publication of application: **09.01.2019**
(21) Application number: 17759890.1
(22) Date of filing: 27.02.2017
(51) Int. Cl.: G08G 1/052, G06Q 50/30, G07C 5/00, G08G 1/09

(54) **MOBILE BODY MANAGEMENT DEVICE, MOBILE BODY MANAGEMENT METHOD AND STORAGE MEDIUM**

(30) Priority: 01.03.2016 JP 2016039255
(71) Applicant: Ricoh Company, Ltd., Tokyo 143-8555 (JP)
(72) Inventor: ASAI, Takahiro, Tokyo 143-8555 (JP)
(74) Representative: Watkin, Timothy Lawrence Harvey
(86) International application number: PCT/JP2017/007392
(87) International publication number: WO 2017/150424

(57) **Abstract**

A mobile object management apparatus for managing a traveling status of a mobile object includes an acquirer that obtains image data generated by an imager by capturing an image of an object; a recognizer that recognizes first traffic information indicated by the object based on the image data; a receiver that receives second traffic information sent from a transmitter and indicated by the object; and an evaluator that evaluates a driving characteristic of a driver of the mobile object based on the first traffic information and traveling status information indicating a traveling status of the mobile object corresponding to an instance where the image data is obtained when the second traffic information has not been received, and evaluates the driving characteristic of the driver of the mobile object based on the second traffic information and the traveling status information indicating the traveling status of the mobile object corresponding to an instance where the second traffic information is received when the second traffic information has been received.

## Description

### TECHNICAL FIELD

An aspect of this disclosure relates to a mobile object management apparatus, a mobile object management method, and a storage medium.

### BACKGROUND ART

There is a known system that evaluates a driving characteristic of a driver of a vehicle such as an automobile based on traveling status information of the vehicle (e.g., information indicating status of the vehicle such as speed that changes according to the driving performed by the driver), and uses safety data indicated by the driving characteristic to calculate the rate of an automobile insurance (see Patent Document 1).

In this system, for example, an in-vehicle computer obtains traveling status information of a vehicle from data detected by sensors provided in the vehicle, evaluates a driving characteristic based on the traveling status information, and determines an automobile insurance fee corresponding to the evaluated driving characteristic.

However, it is not possible to accurately evaluate a driving characteristic based only on the traveling status information. For example, even when a vehicle travels at 60 km/h on a road with a legal speed limit of 30 km/h, the in-vehicle computer cannot determine that the driving characteristic is dangerous driving.

Also, there is a known technology where an in-vehicle computer recognizes an image of a traffic sign captured by a camera to obtain information represented by the traffic sign (Patent Document 2). By combining the system for driving characteristic evaluation with the image recognition technology, it is possible to more accurately evaluate a driving characteristic based on a legal speed limit of a road and an actual traveling speed.

### [RELATED-ART DOCUMENTS]

### [Patent Documents]

[Patent Document 1] Japanese Laid-Open Patent Publication No. 2006-039642
[Patent Document 2] Japanese Laid-Open Patent Publication No. 2013-069278

### DISCLOSURE OF INVENTION

### PROBLEMS TO BE SOLVED BY THE INVENTION

However, the reliability of image recognition is not 100%. Particularly, when an image of a traffic sign is captured by a camera and recognized, the accuracy of the image recognition is not necessarily high because there are many similar traffic signs. Also, the accuracy of image recognition decreases further at night. For the above reasons, the accuracy of evaluating a driving characteristic may not be sufficiently increased even when the image recognition technology is used.

### MEANS FOR SOLVING THE PROBLEMS

An aspect of this disclosure provides a mobile object management apparatus for managing traveling status of a mobile object. The mobile object management apparatus includes an acquirer configured to obtain image data that is generated by an imager by capturing an image of an object; a recognizer configured to recognize first traffic information indicated by the object based on the image data obtained by the acquirer; a receiver configured to receive second traffic information that is sent from a transmitter and indicated by the object; and an evaluator configured to when the second traffic information has not been received by the receiver, evaluate a driving characteristic of a driver of the mobile object based on the first traffic information and traveling status information indicating a traveling status of the mobile object corresponding to an instance where the image data is obtained by the acquirer, and when the second traffic information has been received by the receiver, evaluate the driving characteristic of the driver of the mobile object based on the second traffic information and the traveling status information indicating the traveling status of the mobile object corresponding to an instance where the second traffic information is received by the receiver.

### ADVANTAGEOUS EFFECT OF THE INVENTION

An aspect of this disclosure makes it possible to increase the accuracy of evaluating a driving characteristic.

### BRIEF DESCRIPTION OF THE DRAWINGS

FIG. 1 is a drawing used to describe a use environment and general operations of a driving characteristic evaluation system according to an embodiment;
FIG. 2 is a drawing illustrating a hardware configuration of a mobile object management apparatus;
FIG. 3 is a drawing illustrating a hardware configuration of a camera;
FIG. 4 is a drawing illustrating a hardware configuration of a transmitter;
FIG. 5 is a drawing illustrating a hardware configuration of an evaluation result management server;
FIG. 6 is a functional block diagram of a driving characteristic evaluation system;
FIG. 7 is an example of an evaluation information management table;
FIG. 8 is a sequence chart illustrating a driving characteristic management method; and
FIG. 9 is a flowchart illustrating a driving characteristic evaluation process.

### MODE FOR CARRYING OUT THE INVENTION

Embodiments of the present invention are described below with reference to the accompanying drawings.

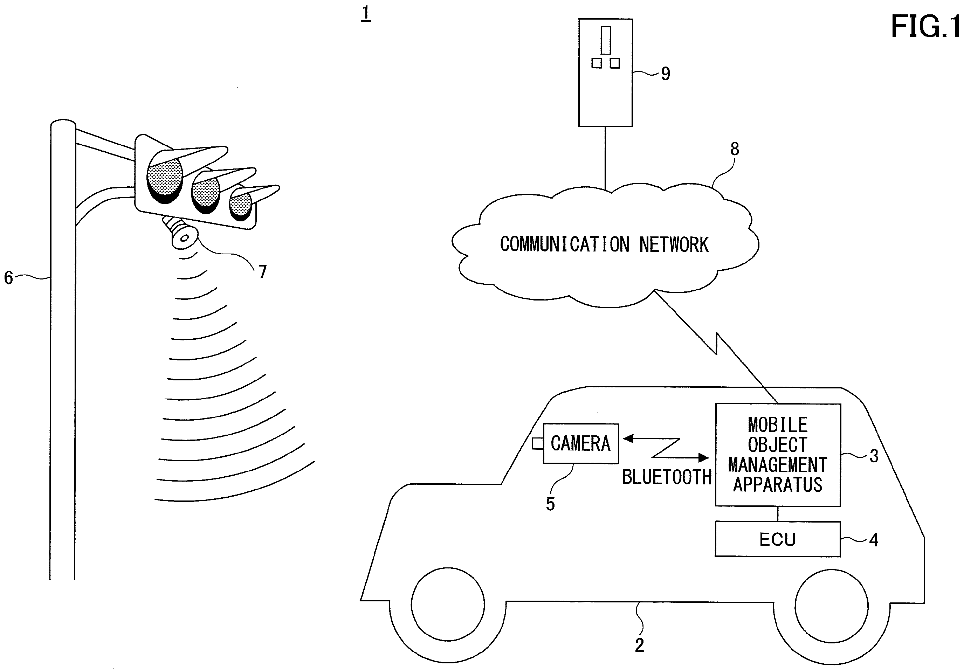

FIG. 1 is a drawing used to describe a use environment and general operations of a driving characteristic evaluation system according to an embodiment.

A driving characteristic evaluation system 1 includes a mobile object management apparatus 3, an ECU 4, a camera 5, a transmitter 7, and an evaluation result management server 9. The mobile object management apparatus 3, the ECU (electronic control unit) 4, and the camera 5 are provided on a mobile object 2. Examples of the mobile object 2 include vehicles such as an automobile and a motorcycle, an airplane, and a ship. In FIG. 1, an automobile is used as an example.

The mobile object management apparatus 3 and the camera 5 can communicate with each other via a near-field radio communication technology such as Bluetooth (registered trademark). Also, the mobile object management apparatus 3 can communicate with the evaluation result management server 9 that is connected to a communication network 8 including, for example, a mobile communication network and a public network. The camera 5 and the mobile object management apparatus 3 may instead be connected to each other via a wireless local area network (LAN) such as Wi-Fi or via a line.

The mobile object management apparatus 3 receives data from the ECU 4 and the camera 5 and manages the traveling status of the mobile object 2. The mobile object management apparatus 3 is connected via a line to an on-board diagnostics (OBD) port (a connector for fault analysis according to the OBD2 standard) of the ECU 4. The mobile object management apparatus 3 evaluates a driving characteristic of a driver of the mobile object 2 based on various types of data (information) sent from the ECU 4, the camera 5, and the transmitter 7, and sends an evaluation result to the evaluation result management server 9.

The ECU 4 is a control computer for electronically controlling the entire mobile object 2. The ECU 4 also functions as a fault diagnosis apparatus. Examples of OBD data include a traveling speed, acceleration, an engine speed, an engine load factor, ignition timing, an intake manifold pressure, mass air flow (MAF), an injection open period, a temperature of engine cooling water (cooling water temperature), a temperature of air taken into the engine (intake air temperature), a temperature outside of the vehicle (external temperature), a fuel flow rate, instantaneous fuel consumption, an accelerator position (throttle position), winker information (operation information of right and left winkers), a brake position, and steering angle information. The OBD data is an example of traveling status information.

The camera 5 captures at least an image of a scene in front of the mobile object 2 to generate image data (image information) and sends the image data to the mobile object management apparatus 3.

The OBD data is generated by the ECU 4 based on information obtained directly from various sensors and is therefore very accurate. However, because the OBD data only provides basic traveling status information related to, for example, a brake pedal and an accelerator pedal, the mobile object management apparatus 3 cannot recognize surrounding conditions (e.g., the color of a light of a traffic signal that is turned on and a traffic sign) at a time when the mobile object 2 is operated. On the other hand, because image data is generated by capturing images of surrounding objects, the image data enables the mobile object management apparatus 3 to recognize surrounding conditions.

In FIG. 1, the transmitter 7 is attached to a traffic signal 6 and transmits a radio beacon or an optical beacon. The transmitter 7 attached to the traffic signal 6 transmits a beacon including information indicating the color of a light of the traffic signal 6 that is turned on (an example of second traffic information). Although the transmitter 7 is attached to the traffic signal 6 in FIG. 1, the transmitter 7 may instead be attached to an automatic speed camera (ORBIS) located close to the traffic signal 6. Also, the transmitter 7 may be attached to a traffic sign instead of the traffic signal 6. In this case, the transmitter 7 transmits a beacon including traffic information represented by the traffic sign (an example of second traffic information). For example, when the transmitter 7 is attached to a stop sign, the transmitter 7 sends a beacon including traffic information indicating "stop".

The evaluation result management server 9 is a server computer installed in an information center for calculating automobile insurance rates, and manages, for example, evaluation result information sent from the mobile object management apparatus 3. The evaluation result information managed by the evaluation result management server 9 is used, for example, to calculate automobile insurance rates. For example, when the total number of evaluation results indicating "safe driving" is greater than the total number of evaluation results indicating "dangerous driving", the insurance rate is decreased. In the opposite case, the insurance rate is increased.

### <<HARDWARE CONFIGURATION OF DRIVING CHARACTERISTIC EVALUATION SYSTEM>>

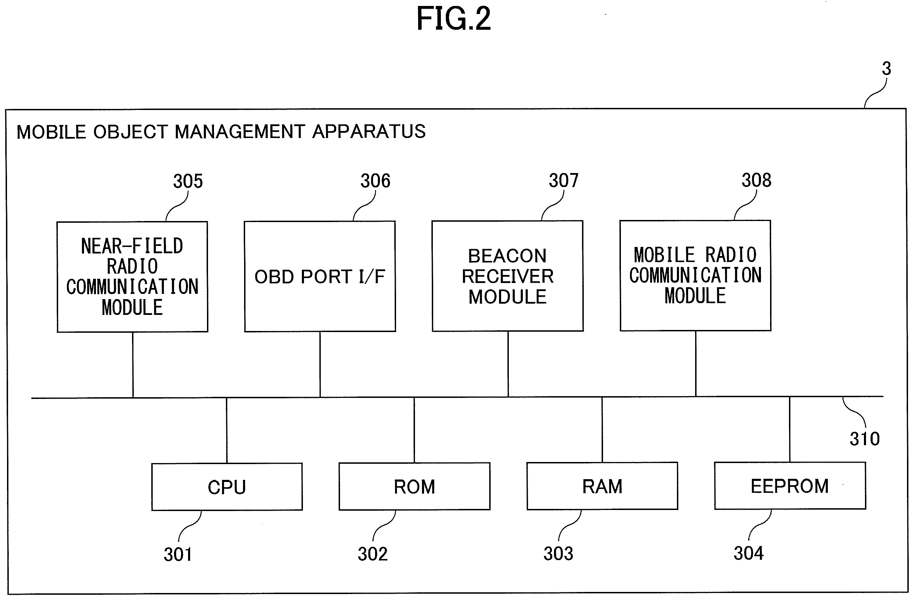

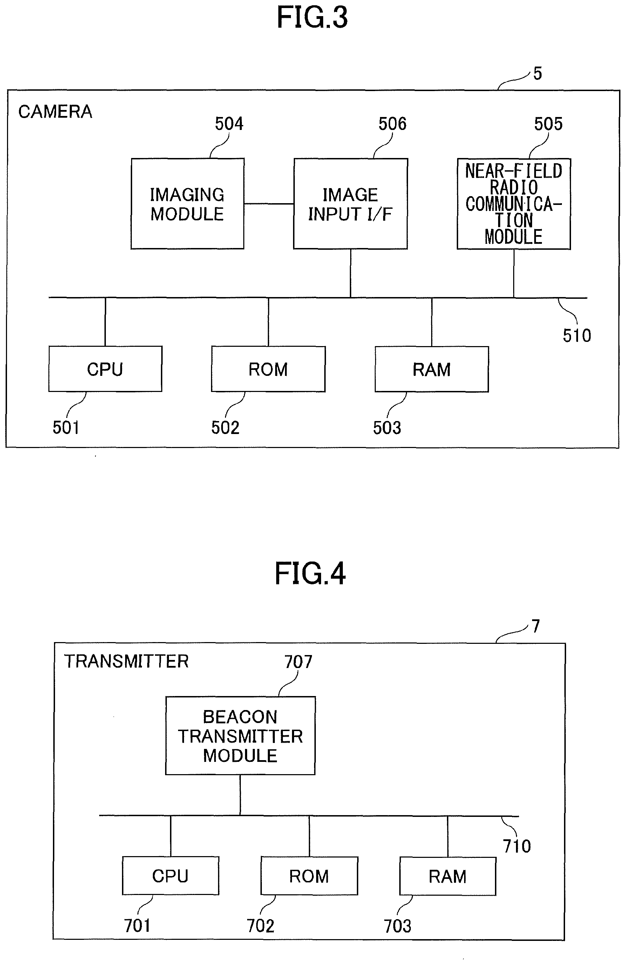

Next, the hardware configuration of the driving characteristic evaluation system 1 is described with reference to FIGs. 2 through 5. FIG. 2 is a drawing illustrating a hardware configuration of the mobile object management apparatus 3. FIG. 3 is a drawing illustrating a hardware configuration of the camera 5. FIG. 4 is a drawing illustrating a hardware configuration of the transmitter 7.

### <HARDWARE CONFIGURATION OF MOBILE OBJECT MANAGEMENT APPARATUS>

As illustrated in FIG. 2, the mobile object management apparatus 3 includes a central processing unit (CPU) 301, a read-only memory (ROM) 302, a random access memory (RAM) 303, an electrically erasable programmable read-only memory (EEPROM) 304, a near-field radio communication module 305, an OBD port I/F 306, a beacon receiver module 307, a mobile radio communication module 308, and a bus line 310 such as an address bus or a data bus for electrically connecting these components.

The CPU 301 is an arithmetic processing unit that controls entire operations of the mobile object management apparatus 3. The ROM 302 stores programs such as an initial program loader (IPL) for driving the CPU 301. The RAM 303 is used as a work area for the CPU 301. The EEPROM 304 reads and writes data and programs for the mobile object management apparatus 3 under the control of the CPU 301.

The near-field radio communication module 305 is, for example, a Bluetooth (registered trademark) module, and modulates and demodulates radio signals to wirelessly communicate with a near-field radio communication module 505 of the camera 5. The OBD port I/F 306 includes a terminal connected to the OBD port of the ECU 4 and an interface with the bus line 310. The OBD port I/F306 performs conversion between a parallel signal on the bus line 310 and a serial signal of the OBD port, and performs signal voltage level conversion for the OBD port. The beacon receiver module 307 receives an optical beacon or a radio beacon. The mobile radio communication module 308 modulates and demodulates radio signals to perform communications according to a mobile communication standard such as 3G (3rd generation) or Long Term Evolution (LTE). In the present embodiment, the mobile radio communication module 308 sends and receives radio signals to and from mobile base stations on the communication network 8 to communicate with the evaluation result management server 9 via the communication network 8.

### <HARDWARE CONFIGURATION OF CAMERA>

As illustrated in FIG. 3, the camera 5 includes a CPU 501, a ROM 502, a RAM 503, an imaging module 504, an image input I/F 506, a near-field radio communication module 505, and a bus line 510 such as an address bus or a data bus for electrically connecting these components to each other.

The CPU 501 is an arithmetic processing unit that controls entire operations of the camera 5. The ROM 502 stores programs such as an IPL for driving the CPU 501. The RAM 503 is used as a work area for the CPU 501.

The imaging module 504 may include, for example, a lens with a normal imaging field angle or a lens that is capable of all-sky imaging. Using a lens capable of all-sky imaging makes it possible to capture not only an image of an object in front of the mobile object 2 but also an image of the driver at the same time. This in turn makes it possible to obtain information including the appearance of the driver in a situation that appears to be dangerous driving. The image input I/F 506 converts image data output from the imaging module 504 into a format that is suitable for storage and analysis as necessary, and transfers the converted image data to the RAM 503 via the bus line 510. The near-field radio communication module 505 is, for example, a Bluetooth module, and modulates and demodulates radio signals to wirelessly communicate with the near-field radio communication module 305 of the mobile object management apparatus 3. That is, the near-field radio communication module 305 is a communication unit for communications between the camera 5 and the mobile object management apparatus 3. The communications between the camera 5 and the mobile object management apparatus 3 may instead be performed via Wi-Fi or a line. A Bluetooth or Wi-Fi communication unit having a Universal Serial Bus (USB, registered trademark) I/F has become popular. To use such a communication unit, a USB (registered trademark) I/F may be provided on the bus line 310.

### <HARDWARE CONFIGURATION OF TRANSMITTER>

As illustrated in FIG. 4, the transmitter 7 includes a CPU 701, a ROM 702, a RAM 703, a beacon transmitter module 707, and a bus line 710 such as an address bus or a data bus for electrically connecting these components to each other.

The CPU 701 is an arithmetic processing unit that controls entire operations of the transmitter 7. The ROM 702 stores programs such as an IPL for driving the CPU 701. The RAM 703 is used as a work area for the CPU 701. The beacon transmitter module 707 sends an optical beacon or a radio beacon.

### (HARDWARE CONFIGURATION OF EVALUATION RESULT MANAGEMENT SERVER)

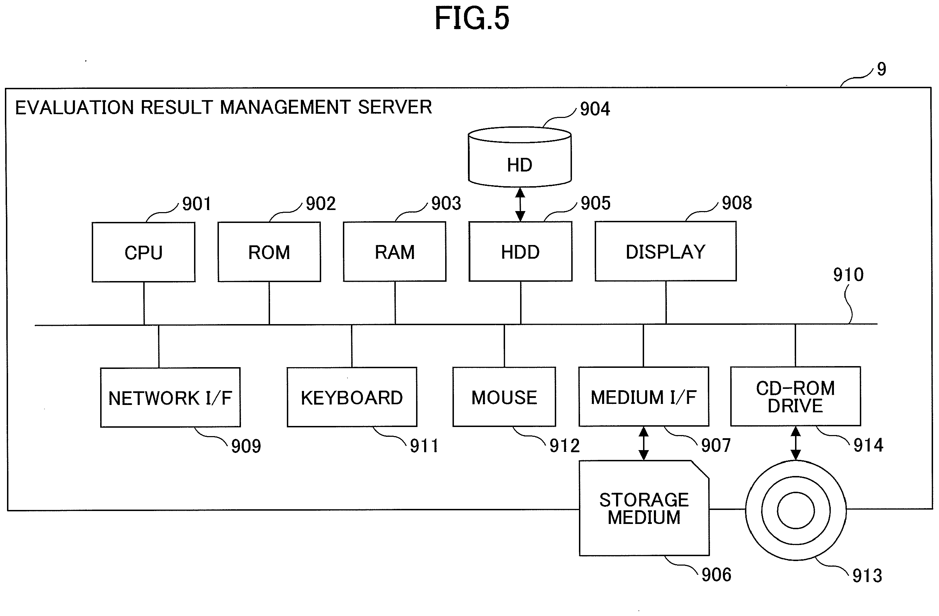

As illustrated in FIG. 5, the evaluation result management server 9 includes a CPU 901, a ROM 902, a RAM 903, a hard disk (HD) 904, a hard disk drive (HDD) 905, a medium I/F 907, a display 908, a network I/F 909, a keyboard 911, a mouse 912, a CD-ROM drive 914, and a bus line 910 such as an address bus or a data bus for electrically connecting these components to each other.

The CPU 901 controls entire operations of the evaluation result management server 9. The ROM 902 stores programs such as an IPL for driving the CPU 901. The RAM 903 is used as a work area for the CPU 901. The HD 904 stores various types of data and programs including an evaluation result management program. The HDD 905 reads and writes data from and into the HD 904 under the control of the CPU 901. The medium I/F 907 controls reading and writing (or storing) of data from and into a storage medium 906 such as a flash memory. The display 908 displays various types of information such as a cursor, menus, windows, characters, and images. The network I/F 909 performs data communications via the communication network 8. The keyboard 911 includes multiple keys for entering, for example, characters, numerals, and commands. The mouse 912 receives user operations to, for example, select and execute commands, select a target object, and move a cursor. The CD-ROM drive 914 reads and writes data from and into a compact-disk read-only memory (CD-ROM) that is an example of a removable recording medium.

### <<FUNCTIONAL CONFIGURATION OF DRIVING CHARACTERISTIC EVALUATION SYSTEM>>

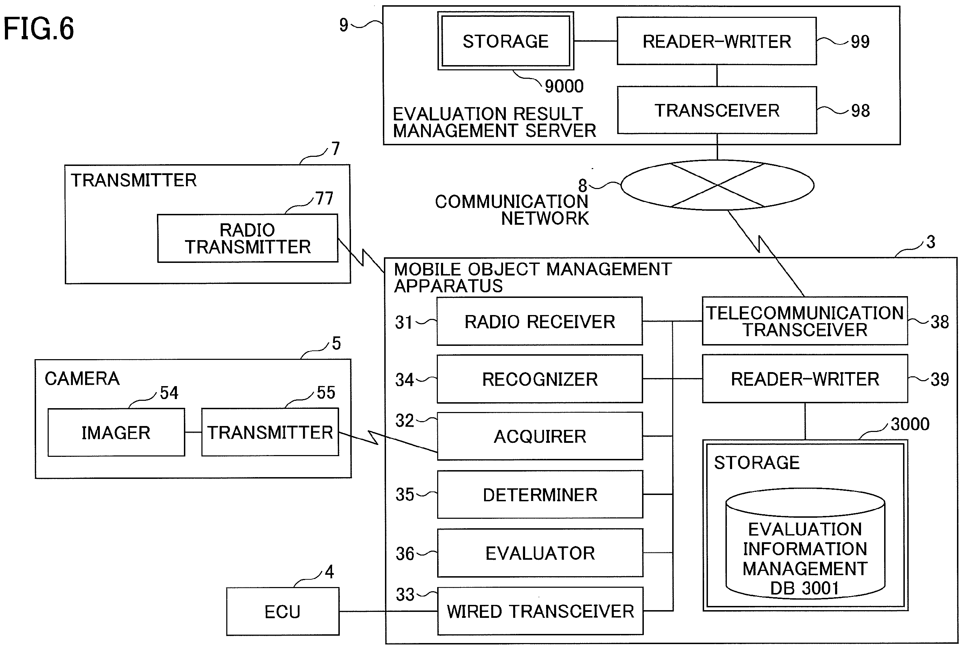

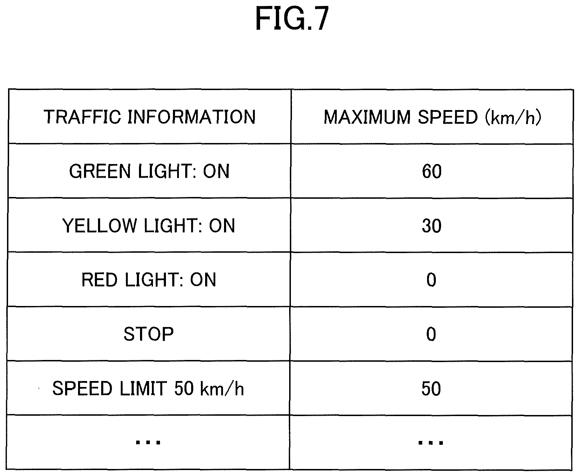

Next, a functional configuration of the driving characteristic evaluation system 1 is described with reference to FIGs. 6 and 7.

### <FUNCTIONAL CONFIGURATION OF MOBILE OBJECT MANAGEMENT APPARATUS>

As illustrated in FIG. 6, the mobile object management apparatus 3 includes a radio receiver 31 (an example of a receiver), an acquirer 32 (an example of an acquirer), a wired transceiver 33, a recognizer 34 (an example of a recognizer), a determiner 35 (an example of a determiner), an evaluator 36 (an example of an evaluator), a telecommunication transceiver 38 (an example of a sender), and a reader-writer 39. Each of these functional components is implemented by one or more of the hardware components illustrated in FIG. 2 that are driven by the CPU 301 according to a program loaded from the EEPROM 304 onto the RAM 303. The mobile object management apparatus 3 also includes a storage 3000 (an example of a storage) that is implemented by the RAM 303 and the EEPROM 304 illustrated in FIG. 2.

### (EVALUATION INFORMATION MANAGEMENT TABLE)

FIG. 7 illustrates an evaluation information management table. The storage 3000 stores an evaluation information management DB 3001 (an example of an evaluation information manager) that includes an evaluation information management table as illustrated in FIG. 7. The evaluation information management table manages traffic information and thresholds in association with each other. In the example of FIG. 7, the traffic information includes "GREEN LIGHT: ON" indicating that the green light of the traffic signal is turned on and "STOP" represented by a traffic sign. Also, the evaluation information management table includes maximum speeds as examples of thresholds. For example, 60 km/h is specified for "GREEN LIGHT: ON" and 0 km/h is specified for "STOP". In this example, when the speed of the mobile object exceeds 60 km/h while the green light is on, the driving characteristic is evaluated as "dangerous driving".

### (FUNCTIONAL COMPONENTS OF MOBILE OBJECT MANAGEMENT APPARATUS)

Next, the functional components of the mobile object management apparatus 3 are described in detail. In the descriptions of the functional components of the mobile object management apparatus 3 below, major hardware components in FIG. 2 used to implement the functional components of the mobile object management apparatus 3 are also explained.

The radio receiver 31 of the mobile object management apparatus 3 in FIG. 6 is implemented by instructions from the CPU 301 in FIG. 2 and the beacon receiver module 307 in FIG. 2, and receives data (information) via a beacon sent from the transmitter 7.

The acquirer 32 is implemented by instructions from the CPU 301 in FIG. 2 and the near-field radio communication module 305 in FIG. 2, and receives data (information) from the camera 5 via, for example, Bluetooth.

The wired transceiver 33 is implemented by instructions from the CPU 301 in FIG. 2 and the OBD port I/F 306 in FIG. 2, and receives traveling status information such as a traveling speed from the ECU 4.

The recognizer 34 is implemented by instructions from the CPU 301 in FIG. 2 and performs image recognition (analysis) on image data sent from the camera 5. For example, when receiving image data obtained by capturing an image of the traffic signal 6 whose green light is turned on, the recognizer 34 recognizes the presence of a traffic signal and that the green light is turned on.

The determiner 35 is implemented by instructions from the CPU 301 in FIG. 2 and determines whether the radio receiver 31 has received traffic information from the transmitter 7.

The evaluator 36 is implemented by instructions from the CPU 301 in FIG. 2. When traffic information (an example of second traffic information) from the transmitter 7 has not been received by the radio receiver 31, the evaluator 36 evaluates the driving characteristic of the driver of the mobile object 2 based on traveling status information indicating traveling status of the mobile object 2 corresponding to an instance where image data is obtained by the acquirer 32 and traffic information (an example of first traffic information) received from the recognizer 34. Also, when traffic information (an example of second traffic information) from the transmitter 7 has been received by the radio receiver 31, the evaluator 36 evaluates the driving characteristic of the driver of the mobile object 2 based on traveling status information indicating traveling status of the mobile object 2 corresponding to an instance where the second traffic information is received by the radio receiver 31 and the second traffic information.

The evaluator 36 searches the evaluation information management table (see FIG. 7) using traffic information (an example of first traffic information) recognized by the recognizer 34 as a search key to retrieve a threshold (in this example, a maximum speed) corresponding to the first traffic information. When traveling status information (in this example, the latest traveling speed) sent from the ECU 4 is greater than the maximum speed, the evaluator 36 evaluates the driving characteristic as "dangerous driving". When the latest traveling speed sent from the ECU 4 is less than or equal to the maximum speed, the evaluator 36 evaluates the driving characteristic as "safe driving".

When traffic information (an example of second traffic information) sent from the transmitter 7 is received by the radio receiver 31, the evaluator 36 searches the evaluation information management table (see FIG. 7) using the traffic information (an example of second traffic information) received by the radio receiver 31 as a search key, in place of the traffic information (an example of first traffic information) recognized by the recognizer 34, to retrieve a threshold (in this example, a maximum speed) corresponding to the second traffic information. When traveling status information (in this example, the latest traveling speed) sent from the ECU 4 is greater than the maximum speed, the evaluator 36 evaluates the driving characteristic as "dangerous driving". When the latest traveling speed sent from the ECU 4 is less than or equal to the maximum speed, the evaluator 36 evaluates the driving characteristic as "safe driving".

The telecommunication transceiver 38 is implemented by instructions from the CPU 301 in FIG. 2 and the mobile radio communication module 308 in FIG. 2, and communicates with the evaluation result management server 9 via the communication network 8.

The reader-writer 39 is implemented by instructions from the CPU 301 in FIG. 2. The reader-writer 39 stores various types of data in the storage 3000 and reads various types of data stored in the storage 3000.

### <FUNCTIONAL CONFIGURATION OF CAMERA>

As illustrated in FIG. 6, the camera 5 includes an imager 54 and a transmitter 55. Each of these functional components is implemented by one or more of the hardware components illustrated in FIG. 3 that are driven by the CPU 501 according to a program loaded onto the RAM 503.

### (FUNCTIONAL COMPONENTS OF CAMERA)

Next, the functional components of the camera 5 are described in detail. In the descriptions of the functional components of the camera 5 below, major hardware components in FIG. 3 used to implement the functional components of the camera 5 are also explained.

The imager 54 of the camera 5 in FIG. 6 is implemented by instructions from the CPU 501, the imaging module 504, and the image input I/F 506 in FIG. 3, and captures an image of an object to generate image data.

The transmitter 55 is implemented by instructions from the CPU 501 and the near-field radio communication module 505 in FIG. 3, and transmits image data generated by the imager 54 to the acquirer 32 of the mobile object management apparatus 3 via, for example, Bluetooth.

### <FUNCTIONAL CONFIGURATION OF TRANSMITTER>

As illustrated in FIG. 6, the transmitter 7 includes a radio transmitter 77. The radio transmitter 77 is implemented by one or more of the hardware components illustrated in FIG. 4 that are driven by the CPU 701 according to a program loaded onto the RAM 703.

The radio transmitter 77 of the transmitter 7 in FIG. 6 is implemented by instructions from the CPU 701 and the beacon transmitter module 707 in FIG. 4, and transmits an optical beacon or a radio beacon. When the transmitter 7 is attached to the traffic signal 6, the radio transmitter 77 transmits a beacon including traffic information (an example of second traffic information) that indicates a traffic signal and the color of a light of the traffic signal that is currently turned on.

### <FUNCTIONAL CONFIGURATION OF EVALUATION RESULT MANAGEMENT SERVER>

As illustrated in FIG. 6, the evaluation result management server 9 includes a transceiver 98 and a reader-writer 99. Each of these functional components is implemented by one or more of the hardware components illustrated in FIG. 5 that are driven by the CPU 901 according to a program loaded from the HD 904 onto the RAM 903. The evaluation result management server 9 also includes a storage 9000 that is implemented by the RAM 903 and the HD 904 illustrated in FIG. 5.

### (FUNCTIONAL COMPONENTS OF EVALUATION RESULT MANAGEMENT SERVER>

Next, the functional components of the evaluation result management server 9 are described in detail. In the descriptions of the functional components of the evaluation result management server 9 below, major hardware components in FIG. 5 used to implement the functional components of the evaluation result management server 9 are also explained.

The transceiver 98 of the evaluation result management server 9 in FIG. 6 is implemented by instructions from the CPU 901 in FIG. 5 and the network I/F 909 in FIG. 5, and communicates with the telecommunication transceiver 38 of the mobile object management apparatus 3 via the communication network 8.

The reader-writer 99 is implemented by instructions from the CPU 901 and the HDD 905 in FIG. 5. The reader-writer 99 stores various types of data in the storage 9000 and reads various types of data stored in the storage 9000.

### <PROCESS/OPERATIONS ACCORDING TO EMBODIMENT>

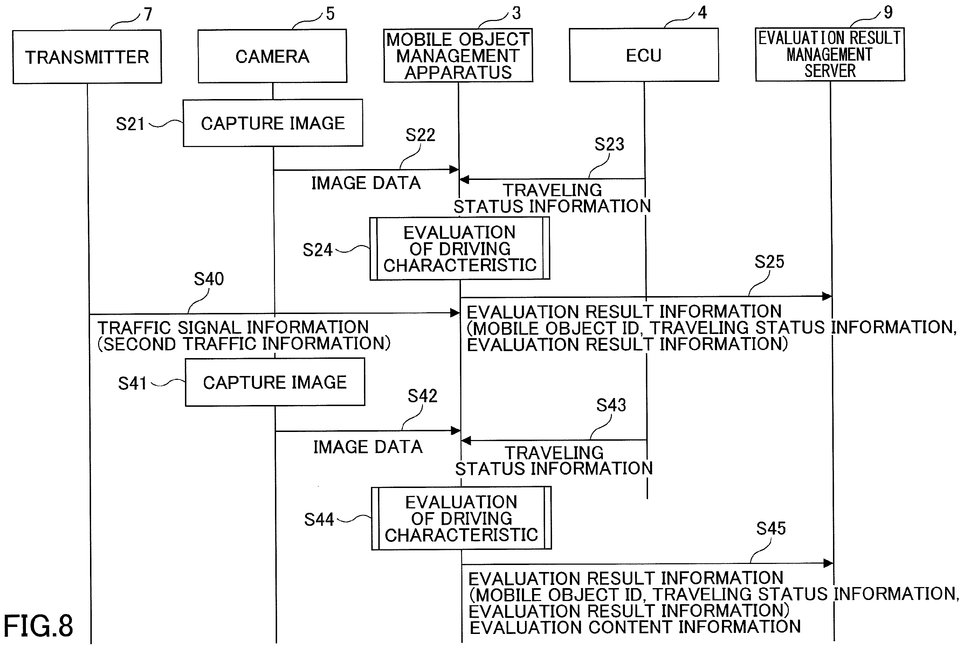

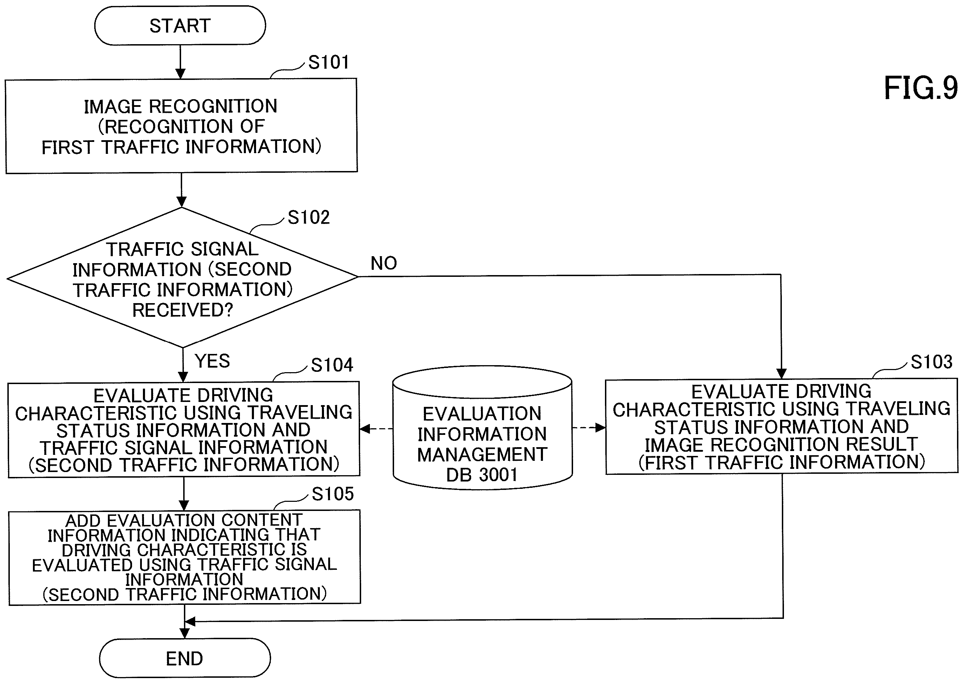

Next, a driving characteristic management method of the present embodiment is described with reference to FIGs. 8 and 9. FIG. 8 is a sequence chart illustrating a driving characteristic management method.

First, a case where the mobile object 2 passes under a traffic signal not equipped with the transmitter 7 is described. The imager 54 of the camera 5 captures an image of the traffic signal (step S21). Next, the transmitter 55 of the camera 5 sends image data of the traffic signal to the mobile object management apparatus 3 (step S22). Then, the acquirer 32 of the mobile object management apparatus 3 obtains the image data. The wired transceiver 33 of the mobile object management apparatus 3 constantly receives traveling status information such as a traveling speed from the ECU 4 (step S23).

Next, the mobile object management apparatus 3 evaluates the driving characteristic of the driver of the mobile object 2 (step S24). Here, a driving characteristic evaluation process is described with reference to FIG. 9. FIG. 9 is a flowchart illustrating a driving characteristic evaluation process.

As illustrated in FIG. 9, the recognizer 34 of the mobile object management apparatus 3 performs image recognition based on the image data (an example of first traffic information) sent from the camera 5 to recognize an object and a color (step S101). For example, when the green light of a traffic signal is turned on, the recognizer 34 recognizes that the traffic signal exists and the green light is currently turned on.

Next, the determiner 35 determines whether traffic signal information (an example of second traffic information) sent from the transmitter 7 has been received by the radio receiver 31 within a predetermined period of time (e.g., 3 seconds) after the image data is obtained by the acquirer 32 (step S102). In this example, the determiner 35 determines that the traffic signal information has not been received by the radio receiver 31 (NO at step S102). Then, the evaluator 36 evaluates the driving characteristic based on the latest traveling status information received at step S23 and the result of the image recognition (an example of first traffic information) performed at step S101 (step S103). For example, the evaluator 36 causes the reader-writer 39 to search the evaluation information management table (see FIG. 7) using the first traffic information, which is the result of the image recognition, as a search key and retrieve a maximum speed (an example of a threshold) corresponding to the first traffic information. When the traveling speed indicated by the latest traveling status information is greater than the maximum speed, the evaluator 36 outputs an evaluation result indicating that the driving characteristic is "dangerous driving". When the traveling speed indicated by the latest traveling status information is less than or equal to the maximum speed, the evaluator 36 outputs an evaluation result indicating that the driving characteristic is "safe driving".

Referring back to FIG. 8, the telecommunication transceiver 38 of the mobile object management apparatus 3 sends evaluation result information to the evaluation result management server 9 (step S25). The evaluation result information includes a mobile object ID for identifying the mobile object 2, the traveling status information used at step S103, and evaluation result information indicating the evaluation result output at step S103. Then, the transceiver 98 of the evaluation result management server 9 receives the evaluation result information, and the reader-writer 99 stores the evaluation result information in the storage 9000. The mobile object ID is an example of mobile object identification information for identifying the mobile object 2.

Next, a case where the mobile object 2 passes under the traffic signal 6 equipped with the transmitter 7 is described. When the mobile object 2 approaches the traffic signal 6, the radio receiver 31 of the mobile object 2 receives traffic signal information (an example of second traffic information) that is constantly transmitted from the transmitter 7 (step S40). Also in this case, steps similar to steps S21, S22, and S23 described above are performed (steps S41, S42, and S43). Next, the mobile object management apparatus 3 evaluates the driving characteristic of the driver of the mobile object 2 (step S44). Here, a driving characteristic evaluation process is described with reference to FIG. 9.

As illustrated in FIG. 9, the recognizer 34 of the mobile object management apparatus 3 performs image recognition based on the image data (an example of first traffic information) sent from the camera 5 to recognize an object and a color (step S101).

Next, the determiner 35 determines whether traffic signal information (an example of second traffic information) sent from the transmitter 7 has been received by the radio receiver 31 within a predetermined period of time (e.g., 3 seconds) after the image data is obtained by the acquirer 32 (step S102). In this example, the determiner 35 determines that the traffic signal information has been received by the radio receiver 31 (YES at step S102). Then, the evaluator 36 evaluates the driving characteristic based on the latest traveling status information received at step S43 and the traffic signal information (an example of second traffic information) received at step S40 (step S104). For example, the evaluator 36 causes the reader-writer 39 to search the evaluation information management table (see FIG. 7) using the second traffic information, which is the traffic signal information, as a search key and retrieve a maximum speed (an example of a threshold) corresponding to the second traffic information. When the traveling speed indicated by the latest traveling status information is greater than the maximum speed, the evaluator 36 outputs an evaluation result indicating that the driving characteristic is "dangerous driving". When the traveling speed indicated by the latest traveling status information is less than or equal to the maximum speed, the evaluator 36 outputs an evaluation result indicating that the driving characteristic is "safe driving".

Further, the telecommunication transceiver 38 adds, to the evaluation result information to be transmitted, evaluation content information indicating that the driving characteristic has been evaluated using the traffic signal information (step S105).

Referring back to FIG. 8, the telecommunication transceiver 38 of the mobile object management apparatus 3 sends the evaluation result information and the evaluation content information to the evaluation result management server 9 (step S45). The evaluation result information includes a mobile object ID for identifying the mobile object 2, the traveling status information used at step S104, and evaluation result information indicating the evaluation result output at step S104. Then, the transceiver 98 of the evaluation result management server 9 receives the evaluation result information and the evaluation content information, and the reader-writer 99 stores the evaluation result information and the evaluation content information in the storage 9000 in association with each other.

The evaluation content information is managed as described above for the following reason. The reliability of image recognition is not 100%. Particularly, when an image of a traffic sign is captured and recognized, the accuracy of the image recognition is not necessarily high because there are many similar traffic signs. On the other hand, the reliability of traffic signal information sent from the transmitter 7 is very high. Accordingly, managing the evaluation result information in association with the evaluation content information by the evaluation result management server 9 makes it possible to use the evaluation result information as a useful material for later analysis.

### <<MAJOR EFFECTS OF PRESENT EMBODIMENT>>

According to the embodiment described above, when the transmitter 7 is not provided or traffic information (an example of second traffic information) is not sent from the transmitter 7, the mobile object management apparatus 3 evaluates the driving characteristic by using traffic information (an example of first traffic information) obtained from an object by image recognition; and when traffic information (an example of second traffic information) is sent from the transmitter 7, the mobile object management apparatus 3 evaluates the driving characteristic by using the second traffic information that is highly reliable. This configuration makes it possible to flexibly evaluate the driving characteristic depending on whether the transmitter 7 is present, and makes it possible to improve the accuracy of driving characteristic evaluation.

### <<VARIATIONS>>

In the above embodiment, evaluation result information and evaluation content information are transmitted from the mobile object management apparatus 3 via the communication network 8 to the evaluation result management server 9. However, the present invention is not limited to the above embodiment. For example, the mobile object management apparatus 3 may be configured to store evaluation result information and evaluation content information in a medium such as a secure digital (SD) card. In this case, for example, the driver may bring the medium to an information center, and an employee at the information center may store the evaluation result information and the evaluation content information in the storage 9000 of the evaluation result management server 9.

Also in the above embodiment, the mobile object management apparatus 3 sends evaluation result information to the evaluation result management server 9 (step S25) even when the driving characteristic is evaluated by using first traffic information (step S103). However, the present invention is not limited to the above embodiment. For example, the mobile object management apparatus 3 may be configured to send evaluation result information and evaluation content information to the evaluation result management server 9 (step S45) only when the driving characteristic is evaluated by using second traffic information (step S104). With this configuration, the mobile object management apparatus 3 sends evaluation result information and evaluation content information to the evaluation result management server 9 only when the driving characteristic is evaluated by using second traffic information that is highly reliable. In this case, the mobile object management apparatus 3 may be configured to not send the evaluation content information to the evaluation result management server 9.

Even when both of steps S25 and S45 are performed, the mobile object management apparatus 3 may be configured to not send the evaluation content information to the evaluation result management server 9 at step S45.

The evaluator 36 may be configured to evaluate the driving characteristic by using, for example, a hierarchical neural network learning method without using the evaluation information management table (see FIG. 7). In this case, input data for the neural network learning method includes traveling status information sent from the ECU 4, image data sent from the camera 5, and(/or) traffic signal information sent from the transmitter 7; and output data from the neural network learning method includes an evaluation result.

The mobile object management apparatus 3 is not necessarily a dedicated apparatus, and may be implemented by a car navigation apparatus, a personal computer, or a smartphone.

Preferred embodiments of the present invention are described above. However, the present invention is not limited to the specifically disclosed embodiments, and variations and modifications may be made without departing from the scope of the present invention.

The present international application is based on and claims the benefit of priority from Japanese Patent Application No. 2016-039255, filed on March 1, 2016, the entire contents of which are hereby incorporated herein by reference.

### EXPLANATION OF REFERENCES

- 1: Driving characteristic evaluation system
- 2: Mobile object
- 3: Mobile object management apparatus
- 4: ECU
- 5: Camera
- 6: Traffic signal
- 7: Transmitter
- 8: Communication network
- 9: Evaluation result management server
- 31: Radio receiver
- 32: Acquirer
- 33: Wired transceiver
- 34: Recognizer
- 35: Determiner
- 36: Evaluator
- 38: Telecommunication transceiver
- 3000: Storage
- 3001: Evaluation information management DB

## Claims

1. A mobile object management apparatus for managing a traveling status of a mobile object, the mobile object management apparatus comprising:
an acquirer configured to obtain image data that is generated by an imager by capturing an image of an object;
a recognizer configured to recognize first traffic information indicated by the object based on the image data obtained by the acquirer;
a receiver configured to receive second traffic information that is sent from a transmitter and indicated by the object; and
an evaluator configured to
when the second traffic information has not been received by the receiver, evaluate a driving characteristic of a driver of the mobile object based on the first traffic information and traveling status information indicating a traveling status of the mobile object corresponding to an instance where the image data is obtained by the acquirer, and
when the second traffic information has been received by the receiver, evaluate the driving characteristic of the driver of the mobile object based on the second traffic information and the traveling status information indicating the traveling status of the mobile object corresponding to an instance where the second traffic information is received by the receiver.

2. The mobile object management apparatus as claimed in claim 1, wherein
the object is a traffic signal; and
each of the first traffic information and the second traffic information indicates a color of a light of the traffic signal that is turned on.

3. The mobile object management apparatus as claimed in claim 1, wherein
the object is a traffic sign; and
each of the first traffic information and the second traffic information indicates information represented by the traffic sign.

4. The mobile object management apparatus as claimed in any one of claims 1 through 3, wherein the traveling status is one of a traveling speed and an acceleration of the mobile object.

5. The mobile object management apparatus as claimed in any one of claims 1 through 4, further comprising:
a sender configured to send evaluation result information indicating an evaluation result of the evaluator via a communication network to an evaluation result management server that manages the evaluation result.

6. The mobile object management apparatus as claimed in claim 5, wherein the sender is configured
to not send the evaluation result information to the evaluation result management server when the driving characteristic of the driver of the mobile object is evaluated by the evaluator based on the traveling status information and the first traffic information, and
to send the evaluation result information to the evaluation result management server when the driving characteristic of the driver of the mobile object is evaluated by the evaluator based on the traveling status information and the second traffic information.

7. The mobile object management apparatus as claimed in claim 5 or 6, wherein when the driving characteristic of the driver of the mobile object is evaluated by the evaluator based on the traveling status information and the second traffic information, the sender sends, to the evaluation result management server, the evaluation result information and evaluation content information indicating that the driving characteristic is evaluated based on the second traffic information.

8. The mobile object management apparatus as claimed in any one of claims 1 through 7, wherein the mobile object management apparatus is one of a car navigation apparatus, a personal computer, a smartphone, and a dedicated apparatus.

9. A mobile object management method performed by a mobile object management apparatus that manages a traveling status of a mobile object, the mobile object management method comprising:
obtaining image data that is generated by an imager by capturing an image of an object;
recognizing first traffic information indicated by the object based on the obtained image data;
when second traffic information sent from a transmitter and indicated by the object has not been received, evaluating a driving characteristic of a driver of the mobile object based on the first traffic information and traveling status information indicating a traveling status of the mobile object corresponding to an instance where the image data is obtained, and
when the second traffic information has been received, evaluating the driving characteristic of the driver of the mobile object based on the second traffic information and the traveling status information indicating the traveling status of the mobile object corresponding to an instance where the second traffic information is received.

10. A computer-readable storage medium storing a program for causing a computer for managing a traveling status of a mobile object to execute a process, the process comprising:
obtaining image data that is generated by an imager by capturing an image of an object;
recognizing first traffic information indicated by the object based on the obtained image data;
when second traffic information sent from a transmitter and indicated by the object has not been received, evaluating a driving characteristic of a driver of the mobile object based on the first traffic information and traveling status information indicating a traveling status of the mobile object corresponding to an instance where the image data is obtained, and
when the second traffic information has been received, evaluating the driving characteristic of the driver of the mobile object based on the second traffic information and the traveling status information indicating the traveling status of the mobile object corresponding to an instance where the second traffic information is received.
